# EUROPÄISCHE PATENTSCHRIFT

(11) **EP 4 363 484 B1**
(45) Veröffentlichungstag und Bekanntmachung des Hinweises auf die Patenterteilung: **12.03.2025**
(21) Anmeldenummer: 22737869.2
(22) Anmeldetag: 27.06.2022
(51) Int. Cl.: C08G 65/336, C08K 5/29, C08L 71/02, C08G 65/16

(54) **ORGANYLOXYSILYLTERMINIERTE POLYMERE AUF BASIS VON 1,3-DIOXOLAN COPOLYMERBAUSTEINEN**
ORGANYLOXYSILYL-TERMINATED POLYMERS ON THE BASIS OF 1,3-DIOXOLANE COPOLYMER BUILDING BLOCKS
POLYMÈRES À TERMINAISON ORGANYLOXYSILYLE À BASE DE SYNTHONS COPOLYMÈRES DE 1,3-DIOXOLANE

(30) Priorität: 29.06.2021 DE 102021206774
(43) Veröffentlichungstag der Anmeldung: 08.05.2024
(73) Patentinhaber: Wacker Chemie AG, 81671 München (DE)
(72) Erfinder: STANJEK, Volker, 84539 Ampfing (DE); DELLERMANN, Theresa, 81371 München (DE); ZANDER, Lars, 84503 Altötting (DE)
(74) Vertreter: Belz, Ferdinand
(86) Internationale Anmeldenummer: PCT/EP2022/067565
(87) Internationale Veröffentlichungsnummer: WO 2023/274960

(56) Entgegenhaltungen:
- EP-B1- 3 020 741
- US-A1- 2005 119 436

## Beschreibung

Die Erfindung betrifft vernetzbare silanterminierte Polymere, die in ihrem Rückgrat 1,3-Dioxolan Copolymerbausteine enthalten, Verfahren zu deren Herstellung sowie Zusammensetzungen, welche die Polymere (P) enthalten. Die Polymere weisen eine hohe Hydrophilie und eine daraus resultierende besonders gute Durchhärtung auf.

Feuchtigkeitsvernetzbare Zubereitungen sind allgemein bekannt. Sie werden verbreitet als Kleb- und Dichtstoffe wie auch für Beschichtungen eingesetzt. Ein wichtiges feuchtigkeitsreaktives Bindemittel für derartige Produkte stellen silylfunktionalisierte Polymere dar. Unter diesen wiederum sind lineare oder einfach verzweigte Polypropylenglycole und/oder Polyurethane auf Basis dieser Polypropylenglycolen bevorzugt, die über terminale Alkoxysilylgruppen an den Enden der jeweiligen Polymerketten verfügen. So vereint diese Produktgruppe mehrere Vorteile miteinander:
- Die Polymere mit einem Rückgrat auf Basis von Polypropylenglycolen sind auch bei den für diese Anwendung notwendigen sehr großen Kettenlängen vor ihrer Vernetzung noch flüssig.
- Die bei der Vernetzung als Spaltprodukte freiwerdenden Alkohole sind nicht korrosiv und in den geringen freigesetzten Konzentrationen toxikologisch unbedenklich.
- Die ausgehärteten Polymerformulierungen zeichnen sich durch sehr gute mechanische Eigenschaften aus.

Entsprechende alkoxysilanterminierte Polymere sind seit langem Stand der Technik und beispielsweise unter den Handelsnamen GENIOSIL^{®} STP-E (Fa. Wacker Chemie AG), MS-Polymer (Fa. Kaneka), DESMOSEAL^{®} (Fa. Bayer AG) oder SPUR^{®} (Fa. Momentive) kommerziell erhältlich.

Nachteilig an vielen Systemen entsprechend des Standes der Technik ist jedoch eine geringe Reaktivität der entsprechenden Polymere gegenüber Feuchtigkeit, was eine aggressive Katalyse erforderlich macht. Die entsprechenden Mischungen enthalten daher typischerweise erhebliche Mengen toxikologisch bedenklicher Zinnkatalysatoren.

Hier ist der Einsatz von sogenannten α-silanterminierten Prepolymeren von Vorteil, die über Alkoxysilylgruppen verfügen, die durch einen Methylenspacer mit einer benachbarten Urethaneinheit verbunden sind. Diese Verbindungsklasse ist hochreaktiv und benötigt weder Zinnkatalysatoren noch starke Säuren oder Basen, um bei Luftkontakt hohe Aushärtgeschwindigkeiten zu erreichen. Auch hier sind entsprechende Produkte kommerziell unter dem Handelsnamen GENIOSIL^{®} STP-E von der Fa. Wacker-Chemie AG erhältlich.

Doch auch diese bei Kontakt mit Luftfeuchtigkeit besonders schnell härtenden Systeme weisen nach wie vor das Problem auf, wenn nicht poröse Substrate wie z.B. Glas, Metalle oder Kunststoffe flächig großflächig verklebt werden. So ist die Härtungsgeschwindigkeit bei einer tiefen Klebefuge nicht nur durch die Reaktivität der vernetzbaren Polymere, sondern auch durch die eingeschränkte Verfügbarkeit der für die Härtung notwendigen Wasserspuren im Fugeninneren limitiert. Und letztere hängt bei der Verklebung oder auch Abdichtung nicht poröser Substrate vor allem von der Geschwindigkeit ab, mit der Wassermoleküle von der Oberfläche der Klebe- oder Dichtfuge durch die Klebstoffmatrix in die tieferen Fugenschichten diffundieren können.

Prinzipiell kann dieses Problem durch die Verwendung sogenannter 2-komponentiger Systeme gelöst werden, bei denen die erste Komponente das feuchtigkeitshärtende Polymer und die zweite Komponente Wasser enthält. Werden dann beide Komponenten direkt vor der Anwendung miteinander vermischt, ist keine Diffusion von Wasser aus der Luftfeuchtigkeit ins Fugeninnere mehr von Nöten und der Kleb- oder Dichtstoff härtet auch in tieferen Schichten gleichmäßig aus. Jedoch sind derartige 2-komponentigen Systeme ausgesprochen anwenderunfreundlich und selbst für professionelle Anwender nur schwer zu verarbeiten. Daher kommen sie daher nur dann zum Einsatz, wenn für die jeweilige Anwendung keine einkomponentige Alternative existiert.

Daher wäre, um eine verbesserte Durchhärtung auch tiefer Kleb- oder Dichtstofffugen ohne Verwendung eines 2-komponentigen Systems zu ermöglichen, eine Klebstoffmatrix, die eine schnellere Wasserdiffusion ermöglicht, ausgesprochen wünschenswert.

Einen weiteren Nachteil aller bisher existierenden kommerziell verfügbaren silanvernetzenden Polymere stellt ihr polypropylenglycol-basierendes Rückgrat dar. So erfolgt die Herstellung von Polypropylenglycolen bislang aus Rohstoffen, die ausschließlich aus fossilen Kohlenstoffquellen gewonnen werden. Wünschenswert wäre somit die Möglichkeit, auch andere, ökologisch günstigere Polymerbausteine als Basis zur Herstellung von silanvernetzbaren Polymeren einsetzen zu können.

Eine Möglichkeit, dieses Ziel zu realisieren, ist die Nutzbarmachung von CO₂ in der Herstellung dieser Polymerbausteine, und CO₂ somit nicht als Abfall, sondern als Ausgangsmaterial in die Wertschöpfungskette zu integrieren.

In diesem Kontext könnten Polyacetale ausgesprochen attraktive Polymerbausteine zur Entwicklung neuartiger silanvernetzender Polymere darstellen. So können diese über die Zwischenstufe zyklischer Acetale unter anderem durch katalytische Fixierung von CO₂ mit grünem Wasserstoff erzeugt werden.

Problematisch ist jedoch, dass klassische Polyacetale, auch genannt Polyoxymethylene (POM), wie sie beispielsweise durch Polymerisation von Formaldehyd, Trioxan (POM-H) oder durch Ringöffnungspolymerisation von 1,3-Dioxolan (POM-C) erhalten werden können, bei Raumtemperatur fest sind. Und damit sind sie nicht geeignet für eine Herstellung von Bindemitteln für flüssige oder pastöse Kleb-, Dicht oder Beschichtungsstoffe, die lösungsmittelfrei bei Raumtemperatur appliziert und erst während bzw. nach seiner Anwendung aushärten sollen.

Aufgabe der Erfindung war somit die Entwicklung von silanterminierten Polymeren auf Basis von Polymerbausteinen, die sich ganz oder teilweise aus nicht-fossilen Kohlenstoffquellen herstellen lassen und zudem eine bessere Diffusion von Wassermolekülen durch die Polymermatrix ermöglichen sollen.

US 2005/119436 A1 offenbart die Herstellung von alkoxysilylterminierten Polypropylenglycol-Polymeren durch Umsetzung von Polypropylenglycol mit isocyanatfunktionellen Silanen. Gegenstand der Erfindung sind organyloxysilylterminierte Polymere (P) mit Endgruppen der Formel (I)

- (CR¹₂)_{b}-SiRₐ (OR²)₃₋ₐ (I) ,

wobei
- R: gleich oder verschieden sein kann und einen einwertigen, unsubstituierten oder substituierten, SiC-gebundenen Kohlenwasserstoffrest darstellt,
- R¹: gleich oder verschieden sein kann und ein Wasserstoffatom oder einen einwertigen, unsubstituierten oder substituierten Kohlenwasserstoffrest darstellt,
- R²: gleich oder verschieden sein kann und ein Wasserstoffatom oder einen einwertigen, unsubstituierten oder substituierten Kohlenwasserstoffrest darstellt,
- a: gleich oder verschieden sein kann und 0, 1 oder 2, bevorzugt 0 oder 1, ist und
- b: gleich oder verschieden sein kann und eine ganze Zahl von 1 bis 10, bevorzugt 1, 3 oder 4, besonders bevorzugt 1 oder 3 ist,
die in ihrem Rückgrat 1,3-Dioxolan Copolymerbausteine (DP) der allgemeinen Formel (II)

-[(O-CH₂-O-CH₂-CH₂-)ₓ₁ (O-CH₂-CH₂-O-CH₂-)ₓ₂ (O-CH₂-O-CHR³-CHR⁴-)_{y1} (O-CHR³-CHR⁴O-CH₂)]_{y2}-O- (II)

enthalten, wobei
- R³: gleich oder verschieden sein kann und Wasserstoff oder einen einwertigen, unsubstituierten oder substituierten C₁- bis C₁₈-Alkylrest bedeutet,
- R⁴: gleich oder verschieden sein kann und Wasserstoff oder einen einwertigen, unsubstituierten oder substituierten C₁- bis C₁₈-Alkylrest bedeutet,
- x1+x2: Werte von 10 bis 2000 bedeutet,
- y1+y2: Werte von 3_{*}(x1+x2+y1+y2)/100 bis 90_{*}(x1+x2+y1+y2)/100 bedeutet,
mit der Maßgabe, dass in den Einheiten [O-CH₂-O-CHR³-CHR⁴-]_{y1} und [O-CHR³-CHR⁴O-CH₂-]_{y2} jeweils mindestens ein Rest R³ oder R⁴ einen C₁- bis C₁₈-Alkylrest bedeutet.

Die 1,3-Dioxolan Copolymerbausteine (DP) der Formel (II) weisen die Einheiten [O-CH₂-O-CH₂-CH₂-]ₓ₁, [O-CH₂-CH₂O-CH₂-]ₓ₂, [O-CH₂-O-CHR³-CHR⁴-]_{y1}, [O-CHR³-CHR⁴O-CH₂-]_{y2}, statistisch verteilt oder in Blöcken auf.

Beispiele für unsubstituierte Reste R sind Alkylreste, wie der Methyl-, Ethyl-, n-Propyl-, iso-Propyl-, 1-n-Butyl-, 2-n-Butyl- , iso-Butyl-, tert.-Butyl-, n-Pentyl-, iso-Pentyl-, neo-Pentyl- , tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste und Halogenarylreste, wie der o-, m- und p-Chlorphenylrest.

Bevorzugt handelt es sich bei Rest R um unsubstituierte oder mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, unsubstituierte oder substituierte Kohlenwasserstoffreste.

Bevorzugt handelt es sich bei Rest R¹ um Wasserstoffatom und unsubstituierte oder substituierte Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder unsubstituierte oder mit Halogenatomen substituierte Alkylreste mit 1 bis 10 Kohlenstoffatomen, besonders bevorzugt um unsubstituierte oder mit Halogenatomen substituierte Alkylreste mit 1 bis 4 Kohlenstoffatomen, insbesondere um den Methyl- und Ethylrest.

Beispiele für Alkylreste R³ und R⁴ sind Wasserstoffatome, lineare und verzweigte Alkylreste, wie der Methyl-, Ethyl-, i-Octyl, n-Octylrest und Cycloalkylreste, wie der Cyclohexylrest. Vorzugsweise bedeuten R³ und R⁴ Wasserstoffatome oder C₁- bis C₆-Alkylreste, besonders bevorzugt Wasserstoffatome, Methyl-Ethyl-, n-Propyl- oder i-Propylreste.

Vorzugsweise bedeutet jeweils nur ein Rest R³ oder R⁴ in den Einheiten [O-CH₂-O-CHR³-CHR⁴-]_{y1} und [O-CHR³-CHR⁴O-CH₂-]_{y2} einen C₁- bis C₁₈-Alkylrest, wohingegen der jeweils andere Rest für ein Wasserstoffatom steht.

Vorzugsweise bedeuten x1+x2 Werte von 20 bis 1000, besonders bevorzugt von 30 bis 500, insbesondere von 50 bis 300.

Vorzugsweise bedeutet y1+y2 Werte von 5_{*}(x1+x2+y1+y2)/100 bis 50_{*}(x1+x2+y1+y2)/100, besonders bevorzugt Werte von 10 (x1+x2+y1+y2) /100 bis 30_{*}(x1+x2+y1+y2)/100, insbesondere Werte von 14_{*}(x1+x2+y1+y2)/100 bis 25_{*}(x1+x2+y1+y2)/100.

Die 1,3-Dioxolan Copolymerbausteine (DP) der Formel (II) weisen vorzugsweise ein zahlenmittleres Molekulargewicht Mₙ zwischen 750 und 300000 Dalton, besonders bevorzugt zwischen 1500 und 125000 Dalton, ganz besonders bevorzugt zwischen 4000 und 24000 Dalton, insbesondere zwischen 6000 - 20000 Dalton auf.

Die organyloxysilylterminierten Polymere (P) können verzweigt sein, wobei sie vorzugsweise 1 bis 3 Verzweigungsstellen und dementsprechend 3 bis 5 Kettenenden aufweisen. Dabei können nur einige oder auch alle Kettenenden mit Silangruppen der Formel (I) terminiert sein. Vorzugsweise sind mindestens 90%, besonders bevorzugt mindestens 95% aller Kettenenden mit Silangruppen der Formel (I) terminiert.

In einer bevorzugten Ausführungsform sind die Polymere (P) jedoch unverzweigt und weisen somit zwei Kettenenden auf. Es können eine oder auch beide Kettenenden mit Silangruppen der Formel (I) terminiert sein. Vorzugsweise sind jedoch mindestens 90%, besonders bevorzugt mindestens 95% aller Kettenenden mit Silangruppen der Formel (I) terminiert.

Die Herstellung der organyloxysilylterminierten Polymere (P) erfolgt vorzugsweise durch eine Umsetzung von mit Hydroxylgruppen terminierten 1,3-Dioxolan Copolymeren (DP-OH) der allgemeinen Formel (III)

H-[(O-CH₂-O-CH₂-CH₂-)ₓ₁ (O-CH₂-CH₂-O-CH₂-)ₓ₂ (O-CH₂-O-CHR³-CHR⁴-)_{y1} (O-CHR³-CHR⁴O-CH₂)_{y2}-OH (III),

wobei alle Variablen die der Formel (II) angegebene Bedeutung aufweisen und damit alle bei dieser Formel angegebenen Maßgaben erfüllt sind.

Die hydroxylterminierten 1,3-Dioxolan Copolymere (DP-OH) weisen dabei vorzugsweise ein zahlenmittleres Molekulargewicht Mₙ zwischen 750 und 300000 Dalton, besonders bevorzugt zwischen 1500 und 125000 Dalton, ganz besonders bevorzugt zwischen 4000 und 24000 Dalton, insbesondere zwischen 6000 - 20000 Dalton auf. Gegenüber den Polymerbausteinen (DP) der Formel (II), die aus der Verwendung der 1,3-Dioxolan Copolymere (DP-OH) resultieren, ist die mittlere Molmasse selbstverständlich um das Gewicht der beiden terminalen Wasserstoffatome erhöht.

Die zahlenmittlere Molmasse Mₙ wird dabei im Rahmen der vorliegenden Erfindung bevorzugt mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Die hydroxylterminierten 1,3-Dioxolan Copolymere (DP-OH) weisen vorzugsweise eine dynamische Viskosität bei 25 °C zwischen 50 mPas - 500 Pas, besonders bevorzugt zwischen 500 mPas - 200 Pas, insbesondere zwischen 1 Pas - 100 Pas auf.

Die Viskosität von nicht pastösen Flüssigkeiten wird im Rahmen der vorliegenden Erfindung bevorzugt nach einer Temperierung auf 23°C mit einem DV 3 P-Rotationsviskosimeter von Fa. A. Paar (Brookfieldsysteme) unter Verwendung von Spindel 6 bei 5 Hz entsprechend der ISO 2555 bestimmt.

Es sind zahlreiche Verfahren bekannt, die zur Herstellung von organyloxysilylterminierten Polymeren aus hydroxylfunktionellen Prepolymeren, z.B. Polypropylenglycolen, geeignet sind. All diese Verfahren lassen sich problemlos auf eine Umsetzung der hydroxylterminierten 1,3-Dioxolan Copolymere (DP-OH) zu den erfindungsgemäßen Polymeren (P) übertragen. Dabei können alle Verfahrensparameter wie Temperatur, Reaktionszeit, Katalyse etc. unverändert bleiben. Der einzige Unterschied besteht darin, dass ein hydroxylterminiertes 1,3-Dioxolan Copolymer (DP-OH) als Edukt, d.h. als hydroxylfunktionelles Polymer, eingesetzt wird.

Bei einem gängigen Verfahren (V1) werden die hydroxylgruppenhaltigen Polymere (DP-OH) zunächst mit einer Verbindung mit einer gegenüber Hydroxylgruppen reaktiven Gruppe und einer Doppelbindung, vorzugsweise Allylchlorid, zu einem entsprechenden vinyl-terminierten Polymer umgesetzt, das dann mit einem Silan der Formel (IV)

H-SiRₐ(OR²)₃₋ₐ (IV)

hydrosilyliert wird, wobei alle Variablen die der Formel (I) angegebenen Bedeutungen aufweisen. Geeignete Verfahren zur Durchführung dieser Umsetzung sind bekannt und unter anderem in EP 1 566412 A1 (Absätze [0144]ff, Methode (a)) beschrieben. Auch die in den Herstellbeispielen von EP 1 566412 A1 konkret beschriebenen Durchführungsanweisungen zur Silylierung der dort verwendeten hydroxylterminierten Polypropylenglycole kann direkt auf die Silylierung der hydroxylterminierten 1,3-Dioxolan Copolymere (DP-OH)) übertragen werden.

Bei einem zweiten ebenfalls gängigen Verfahren (V2) werden die hydroxylgruppenhaltigen Polymere (DP-OH) mit mindestens einer isocyanatfunktionellen Verbindung umgesetzt. Vorzugsweise handelt es sich dabei um Di- oder Polyisocyanate. Beispiele für gebräuchliche Diisocyanate sind Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI) oder auch von Hexamethylendiisocyanat (HDI). Beispiele für Polyisocyanate sind polymeres MDI (P-MDI), Triphenylmethantriisocanat oder aber Trimerisate (Biurethe oder Isocyanurate) der oben genannten Diisocyanate.

Die Isocyanate können dabei bezüglich des Verhältnisses der Isocyanatgruppen zu den Hydroxylgruppen des hydroxylgruppenhaltigen Polymers (DP-OH) im stöchiometrischen Unterschuss (Variante (V2-1)) oder im Überschuss (Variante (V2-2)) eingesetzt werden. Bei der Variante (V2-1) wird ein Polyurethanpolymer erhalten, dessen Kettenenden mit Hydroxylgruppen terminiert sind, bei der Variante (V2-1) ein Polymer, dessen Kettenenden aus Isocyanatgruppen besteht.

Das bei Variante (V2-1) erhaltene hydroxylgruppen-funktionelle Polyurethanpolymer wird bevorzugt mit einem isocyanatfunktionellen Silan der Formel (V)

OCN-(CR¹₂)_{b}-SiRₐ(OR²)₃₋ₐ (V)

umgesetzt, wobei die Reste und Indizes eine der bei Formel (I) angegebenen Bedeutung aufweisen. Geeignete Verfahren zur Durchführung dieser Umsetzung sind bekannt und unter anderem in EP 0 931 800 A (Absätze [0011]-[0022] sowie Beispiele 1-5) beschrieben.

Das bei Variante (V2-2) erhaltene isocyanat-funktionelle Polymer wird hingegen bevorzugt mit einem isocyanatreaktiven Silan der Formel (VI)

Z-(CR¹₂)_{b}-SiRₐ(OR²)₃₋ₐ (VI)

umgesetzt, wobei
Z eine isocyanatreaktive Gruppe darstellt und alle sonstigen Reste und Indizes eine bei Formel (I) angegebene Bedeutung aufweisen.

Bei der isocyanatreaktive Gruppe Z handelt es sich vorzugsweise um eine Hydroxylgruppe oder eine Aminogruppe, besonders bevorzugt eine Aminogruppe der Formel NHR', wobei R' eine der für die Reste R angegebene Bedeutung hat oder für eine Gruppe - CH(COOR")-CH₂-COOR" steht, in der R" gleich oder verschieden sein kann und eine für R angegebene Bedeutung hat.

Beispiele für Reste R' sind Cyclohexyl-, Cyclopentyl-, n- und iso-Propyl-, n-, iso- und t-Butyl-, die diversen Sterioisomere des Pentylrests, Hexylrests oder Heptylrests sowie der Phenylrest.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Bei den Resten R" handelt es sich vorzugsweise um Alkylgruppen mit 1 bis 10 Kohlenstoffatomen, besonders bevorzugt um Methyl-, Ethyl- oder Propylreste.

Geeignete Verfahren zur Durchführung der Verfahrensvariante (V2-2) sind bekannt und unter anderem in EP 1 093 482 B1 (Absätze [0014]-[0023], [0039]-[0055] sowie Beispiel 1 und Vergleichsbeispiel 1) oder EP 1 641 854 B1 (Absätze [0014]-[0035], Beispiele 4 und 6 sowie die Vergleichsbeispiele 1 und 2) beschrieben.

Bei einem besonders bevorzugten Verfahren (V3) werden die erfindungsgemäßen Polymere (P) durch eine direkte Umsetzung der hydroxylterminierten 1,3-Dioxolan Copolymere (DP-OH) mit isocyanatfunktionellen Silanen der Formel (V) erhalten. Geeignete Verfahren zur Durchführung dieser Umsetzung sind bekannt und unter anderem in EP 1 535 940 B1 (Absätze [0005]-[0025] sowie Beispiele 1-3 und Vergleichsbeispiel 1-4) oder EP 1 896 523 B1 (Absätze [0008]-[0047]) beschrieben, die zum Offenbarungsgehalt der vorliegenden Anmeldung zu zählen sind.

Die durch das bevorzugte Verfahren (V3) erhältlichen Polymere der Formel (VII)

(RO⁵)₃₋ₐR⁴ₐSi-(CR³₂)_{b}-NH-CO-[(O-CH₂-O-CH₂-CH₂-)ₓ₁ (O-CH₂-CH₂-O-CH₂-)ₓ₂ (O-CH₂-O-CHR³-CHR⁴-)_{y1} (O-CHR³-CHR⁴O-CH₂-)_{y2}]-O-CO-NH-(CR³₂)_{b}-SiR⁴ₐ(OR⁵)₃₋ₐ (VII),

wobei alle Variablen die bei Formel (I) und (II) angegebene Bedeutungen aufweisen und damit alle bei diesen Formeln angegebenen Maßgaben erfüllt sind, stellen eine besonders bevorzugte Ausführungsform der Erfindung dar.

Die mit Hydroxylgruppen terminierten 1,3-Dioxolan Copolymere (DP-OH) der vorstehenden allgemeinen Formel (III) sind auf einfache Weise und mit kurzen Reaktionszeiten herstellbar.

Die Herstellung erfolgt dabei vorzugsweise durch Copolymerisation von 1,3-Dioxolan mit einem oder mehreren alkylsubstituierten 1,3-Dioxolanen der allgemeinen Formel (VII) 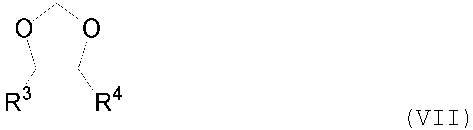 in Gegenwart einer Lewis- oder Brønstedt-Säure, wobei die Alkylreste R³ und R⁴ die bei Formel (II) angegebenen Bedeutungen aufweisen.

Das Verfahren ist eine ringöffnende Polymerisation der Dioxolan-Monomere durch kationisch induzierte Katalyse. Katalysator ist eine Lewis- oder Brønstedt-Säure.

Im Verfahren werden vorzugsweise mindestens 10 Mol-%, besonders bevorzugt mindestens 20 Mol-%, insbesondere mindestens 30 Mol-% an alkylsubstituiertem 1,3-Dioxolan der allgemeinen Formel II, bezogen auf die Gesamtmenge an 1,3-Dioxolan und alkylsubstituiertem 1,3-Dioxolan der allgemeinen Formel II eingesetzt.

Die Einsatzmenge an alkylsubstituierten 1,3-Dioxolanen ist dabei entscheidend für das Verhältnis (y1+y2)/(x1+x2+y1+y2) im bei der Copolymerisation erhaltenen hydroxylterminierten 1,3-Dioxolan Copolymer (DP-OH). Dabei ist jedoch zu beachten, dass bei dem Verfahren meist etwas mehr alkylsubstituiertes 1,3-Dioxolan der allgemeinen Formel (VII) eingesetzt werden muss, als dies rein rechnerisch notwendig wäre, da dieses reaktionsträger als das unsubstituierte 1,3-Dioxolan ist und dementsprechend etwas seltener in die Polymerkette eingebaut wird.

Beispiele für Säuren sind Lewis-Säuren, wie BF₃, AlCl₃, TiCl₃, SnCl₄, SO₃, PCl₅, POCl₃, FeCl₃ und dessen Hydrate und ZnCl₂; Brønstedt-Säuren, wie Bor-, Tetrafluorobor-, Salpetersäure, salpetrige Säure, Phosphorsäure, phosphorige Säure, unterphosphorige Säure, Schwefelsäure, schwefelige Säure, Peroxoschwefel-, Salz-, Fluß-, Jodwasserstoff-, Bromwasserstoff-, Perchlor-, Hexafluorophosphorsäure, Aluminiumchlorid, Zinkchlorid, Benzolsulfon-, p-Toluolsulfon-, Methansulfon-, Trifluormethansulfon- und Carbonsäuren, wie Chloressig-, Trichloressig-, Essig-, Acryl-, Benzoe-, Trifluoressig-, Zitronen-, Croton-, Ameisen-, Fumar-, Malein-, Malon-, Gallus-, Itacon-, Milch-, Wein-, Oxal-, Phthal- und Bernsteinsäure, saure Ionenaustauscher, saure Zeolithe, säureaktivierte Bleicherde und säureaktivierter Ruß.

Besonders bevorzugt sind Bortrifluoridetherat und Trifluormethansulfonsäure.

Es können Initiatoren im Verfahren eingesetzt werden. Als Initiator bevorzugt ist ein difunktioneller Alkohol, besonders bevorzugt wird Ethylenglykol eingesetzt.

Das Verfahren kann in Anwesenheit oder in Abwesenheit von aprotischen Lösungsmitteln durchgeführt werden. Falls aprotische Lösungsmittel verwendet werden, sind Lösungsmittel oder Lösungsmittelgemische mit einem Siedepunkt bzw. Siedebereich von bis zu 120° C bei 0,1 MPa bevorzugt. Beispiele für solche Lösungsmittel sind Ether, wie Dioxan, Tetrahydrofuran, Diethylether, Methyl-tert-butylether, Diisopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Siloxane, insbesondere lineare Dimethylpolysiloxane mit Trimethylsilylendgruppen mit bevorzugt 0 bis 6 Dimethylsiloxaneinheiten, oder cyclische Dimethylpolysiloxane mit bevorzugt 4 bis 7 Dimethylsiloxaneinheiten, beispielsweise Hexamethyldisiloxan, Octamethyltrisiloxan, Octamethylcyclotetrasiloxan und Decamethylcyclopentasiloxan;
Ketone, wie Aceton, Methylethylketon, Di-isopropylketon, Methyl-isobutylketon (MIBK); Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel.

Die Bezeichnung Lösungsmittel bedeutet nicht, dass sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

Besonders bevorzugt wird eine Lösung aus Trifluormethansulfonsäure und einem Initiator eingesetzt, wobei als bevorzugtes Lösungsmittel Methylenchlorid verwendet wird.

Die eingesetzte Menge an Katalysator und Initiator bestimmt das erzielbare Molekulargewicht des 1,3-Dioxolan Copolymers (DP-OH) der allgemeinen Formel (IV).

Das Verfahren wird vorzugsweise bei einer Temperatur zwischen 10 und 60 °C, besonders bevorzugt zwischen 15 und 40 °C, insbesondere zwischen 21 und 30 °C durchgeführt. Ganz besonders bevorzugt ist eine Reaktionstemperatur von 23 °C.

Die Aufarbeitung der Reaktion erfolgt bevorzugt durch Inaktivierung des Katalysators mittels einer geeigneten Base, Waschen mit einem Kohlenwasserstoff, wie Heptan und dessen anschließende destillative Entfernung bei vermindertem Druck. Als Base eignet sich bevorzugt Pyridin, Triethylamin oder wässrige Natronlauge.

Der Erfindung liegen gleich mehrere überraschende Entdeckungen zugrunde:
Erstens sind die hydroxylterminierten 1,3-Dioxolan Copolymere (DP-OH), die aus 1,3-Dioxolan und an der 4-Position und /oder 5-Position substituiertem 1,3-Dioxolan aufgebaut sind, über einen weiten Temperaturbereich inklusive Raumtemperatur flüssig. Dies gilt auch dann, wenn sie mittlere Molmassen von >> 10000 Dalton aufweisen. Und angesichts dieser überraschenden Eigenschaft eignen sie sich hervorragend als Polymerbausteine (DP) zum Aufbau der erfindungsgemäßen Polymere (P) nach einem der erfindungsgemäßen Verfahren V1 bis V3 und sind deshalb sehr gut geeignet, um weiter verarbeitet zu werden.

Die Polymere (P) auf Basis der 1,3-Dioxolan Copolymerbausteine (DP) sind hochpolar und damit hydrophil. Somit stellen sie ein ideales Bindemittel für Kleb- und Dichtstoffe dar, die eine schnelle Diffusion von Wassermolekülen in die tieferen Schichten einer Klebe- oder Dichtfuge und damit eine besonders gute, schnelle und gleichmäßige Aushärtung des entsprechenden Kleb- und Dichtstoffes.

Die Polymere (P) stellen ein geeignetes Bindemittel für Kleb- und Dichtstoffe dar, die nach ihrer Aushärtung hervorragende Eigenschaften aufweisen, die mit denen eines herkömmlichen silanterminierten Polymers auf Polypropylenglycolbasis weitgehend vergleichbar sind. Damit stellt diese vollkommen neue Produktgruppe, deren Rohstoffgrundlage über die Zwischenstufe zyklischer Acetale durch eine katalytische Fixierung von CO₂ mit grünem Wasserstoff erhältlich ist, eine Alternative dar, mit der bestehende Produkte, die ausschließlich aus fossilen Kohlenstoffquellen erhältlich sind, ganz oder zumindest teilweise ersetzt werden können.

Die erfindungsgemäß hergestellten organyloxysilylterminierten Polymere (P) können überall dort eingesetzt werden, wo auch bisher organyloxysilylterminierte Polymere eingesetzt wurden. Vor allem eignen sie sich als Bestandteil von vernetzbaren Massen, d.h. als Bindemittel für Klebstoffe, Dichtstoffe und/oder Beschichtungen. Aufgrund ihrer verbesserten Durchhärtung sind sie insbesondere für eine Verwendung in tiefen Kleb- oder Dichtfugen sowie für eine großflächige Verklebung nicht poröser Substrate geeignet.

Gegenstand der Erfindung sind somit auch Zusammensetzung, welche die organyloxysilylterminierten Polymere (P) und abhängig von der spezifischen Anwendung bzw. dem jeweiligen Anforderungsprofil mindestens einen weiteren Bestandteil enthalten, ausgewählt aus (A) Stickstoff aufweisende Organosiliciumverbindungen, (B) Siliconharze, (C) Katalysatoren, (D) Haftvermittler, (E) Wasserfänger, (F) Füllstoffe, (G) Additive und (H) Zuschlagstoffe.

Bevorzugt handelt es sich bei den erfindungsgemäßen Zusammensetzungen um vernetzbare Massen enthaltend
(P) organyloxysilylterminierte Polymere (P),
gegebenenfalls (A) Stickstoff aufweisende Organosiliciumverbindungen,
gegebenenfalls (B) Siliconharze,
gegebenenfalls (C) Katalysatoren,
gegebenenfalls (D) Haftvermittler,
gegebenenfalls (E) Wasserfänger,
gegebenenfalls (F) Füllstoffe,
gegebenenfalls (G) Additive und
gegebenenfalls (H) Zuschlagstoffe.

Die Komponenten (A) bis (H) sowie ihre bevorzugten Einsatzmengen sind dabei vielfach beschrieben, beispielsweise WO-A 2015024773 auf Seite 12, Zeile 24 bis Seite 23, Zeile 21, was zum Offenbarungsgehalt der vorliegenden Anmeldung zu zählen ist.

Besonders bevorzugt handelt es sich bei den erfindungsgemäßen Zusammensetzungen um vernetzbare Massen enthaltend
(P) organyloxysilylterminierte Polymere,
(A) Stickstoff aufweisende Organosiliciumverbindungen,
gegebenenfalls (B) Siliconharze,
gegebenenfalls (C) Katalysatoren,
gegebenenfalls (D) Haftvermittler,
gegebenenfalls (E) Wasserfänger,
gegebenenfalls (F) Füllstoffe,
gegebenenfalls (G) Additive und
gegebenenfalls (H) Zuschlagstoffe.

Insbesondere bevorzugt handelt es sich bei den erfindungsgemäßen Zusammensetzungen um vernetzbare Massen bestehend aus
(P) organyloxysilylterminierte Polymere,
(D) Stickstoff aufweisende Organosiliciumverbindungen,
gegebenenfalls (B) Siliconharze,
gegebenenfalls (C) Katalysatoren,
gegebenenfalls (D) Haftvermittler,
gegebenenfalls (E) Wasserfänger,
gegebenenfalls (F) Füllstoffe,
gegebenenfalls (G) Additive und
gegebenenfalls (H) Zuschlagstoffe.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die Herstellung der erfindungsgemäßen Klebstoffe, Dichtstoffe oder Beschichtungen kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Die Reihenfolge, in der die verschiedenen Bestandteile miteinander vermischt werden, kann dabei beliebig variiert werden.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren

Temperaturen erfolgen, **z.B.** bei Temperaturen im Bereich von 30 bis 130°C. Weiterhin ist es möglich, zeitweilig oder ständig unter vermindertem Druck zu mischen, wie **z.B.** bei 30 bis 500 hPa Absolutdruck, um flüchtige Verbindungen und/oder Luft zu entfernen. Das erfindungsgemäße Vermischen erfolgt bevorzugt unter Ausschluss von Feuchtigkeit.

Die erfindungsgemäßen Polymere (P) haben den Vorteil, dass sie ebenso schnell und einfach herstellbar sind, wie herkömmliche silanvernetzende Polymere auf Basis von Polypropylenglycolen.

Die erfindungsgemäßen Polymere (P) haben den Vorteil, dass sie dünnflüssig und vergleichsweise niederviskos sind, so dass sie hervorragend zu fertigen Kleb- und Dichtstoffen compoundiert werden können.

Die erfindungsgemäßen Polymere (P) haben den Vorteil, dass sie, obgleich sie eine vollkommen neue Produktgruppe darstellen, ebenso zu Kleb- und Dichtstoffen weiterverarbeitet können, wie herkömmliche silanvernetzende Polymere auf Basis von Polypropylenglycolen. Für eine Weiterverarbeitung sind weder neue bzw. modifizierte Anlagen noch neue bzw. modifizierte Arbeitstechniken notwendig.

Die erfindungsgemäßen Polymere (P) haben den Vorteil, dass sich aus ihnen Kleb- und Dichtstoffe mit hervorragenden mechanischen Eigenschaften darstellen lassen.

Die erfindungsgemäßen Polymere (P) haben den Vorteil, dass sich aus ihnen Kleb- und Dichtstoffe darstellen lassen, die eine besonders schnelle und gleichmäßige Durchhärtung zeigen.

Die erfindungsgemäßen Polymere (P) haben den Vorteil, dass die aus ihnen herstellbaren Kleb- und Dichtstoffe ein hervorragendes Haftungsprofil auf zahllosen Untergründen wie Kunststoffe inkl. PVC, Metalle, Beton, Holz, mineralische Untergründe, Glas, Keramik und lackierte Oberflächen aufweisen und demnach zum Verkleben und/oder Abdichten von all diesen Materialien geeignet sind.

Die erfindungsgemäßen Polymere (P) haben den Vorteil, dass sie transparent, farblos und farbstabil sind, und sich somit auch zur Herstellung von transparenten und glasklaren Kleb- und Dichtstoffen eignen.

Die erfindungsgemäßen Polymere (P) haben den Vorteil, dass sie sich unter Fixierung von CO₂ herstellen lassen, womit sie besonders klimafreundlich sind.

Die aus den erfindungsgemäßen Polymeren (P) herstellbaren Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die aus den erfindungsgemäßen Polymeren (P) herstellbaren Massen eignen sich somit ausgezeichnet beispielsweise zum Abdichten und flexiblen Verkleben von metallischen Bauteilen. Sie können somit als Montageklebstoffe, für den Automobilbau und für die Bus-, LKW- und Schienenfahrzeugherstellung verwendet werden. Weiterhin eignen sie sich zum Fensterbau, insbesondere von Dachfenstern, strukturellen Glasverklebungen oder zur Herstellung von Photovoltaikelementen, Vitrinen, sowie z.B. zur Herstellung von Schutzüberzügen oder von Formkörpern sowie für die Isolierung von elektrischen oder elektronischen Vorrichtungen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50% durchgeführt. Des Weiteren beziehen sich alle Angaben von Teilen und Prozentsätzen, soweit nichts anderes angegeben ist, auf das Gewicht.

### Beispiele

### Herstellbeispiel 1: Herstellung eines mit Hydroxylgruppen terminierten 1,3-Dioxolan Copolymers (DP-OH)

Herstellung der Katalysatorlösung: In einem Schlenkkolben mit Septum werden 150 ml trockenes Dichlormethan, 15 ml Ethylenglykol und 1,14 ml Trifluormethansulfonsäure unter Stickstoffatmosphäre gemischt.

154 ml der zuvor hergestellten Katalysatorlösung werden in einen Laborreaktor mit KPG-Rührer, Thermometer, Stickstoffanschluss und Septum überführt und auf 23 °C temperiert. Zu dieser Lösung werden 1,15 kg 4-Ethyl-1,3-dioxolan (10,9 mol) und 770 ml (10,9 mol) 1,3-Dioxolan gegeben und die Mischung bei 23 °C gerührt. Der Reaktionsansatz wird während der Reaktionszeit viskoser und verfärbt sich rosa. Nach 5 h werden ca. 20 ml Pyridin und 100 ml Dichlormethan bis zur Entfärbung der Reaktionslösung zugegeben. Das Produktgemisch wird erst mit Heptan und anschließend mit Wasser gewaschen, bis sich ein pH-Wert von 7 einstellt.

Schließlich werden alle flüchtigen Bestandteile im Vakuum (1 mbar) entfernt und es wird ein viskoses Öl erhalten.

### Herstellbeispiel 2: Herstellung eines erfindungsgemäßen Polymers (P)

In einem 1 l-Dreihalskolben mit Tropftrichter, KPG-Rührer und Thermometer werden 475 g des 1,3-Dioxolan Copolymere aus Beispiel 1 vorgelegt, auf 80 °C erwärmt und für 2 h bei einem Druck von 10 mbar (Vakuum) getrocknet.

Das Vakuum wird mit Stickstoff gebrochen, und es werden innerhalb von 15 min 18,5 g α-Isocyanatomethyl-methyldimethoxysilan (GENIOSIL^{®} XL 42, käuflich erhältlich bei der Wacker Chemie AG, D-München) unter Rühren zugetropft. Die Temperatur bleibt dabei bei 80 °C. Danach werden 0,07 g eines bismuthaltigen Katalysators (käuflich erhältlich unter der Bezeichnung "Borchi-Kat 315" der Fa. OMG-Borchers, D-Langenfeld) zugegeben. Es kommt zu einer geringfügigen Erwärmung der Reaktionsmischung (< 5°C). Anschließend wird für 2 h bei 80 °C gerührt. Im IR-Spektrum der Reaktionsmasse ist danach noch ein kleiner Isocyanat-Peak vorhanden, der 2 bis 5% der ursprünglich eingesetzten Menge an Isocyanatgruppen entspricht.

Man lässt auf 50 °C abkühlen und gibt bei dieser Temperatur 1,3 g Methanol zu, um das restliche Isocyanat zu vernichten. Nach 0,5 h lässt man die Reaktionsmischung auf Raumtemperatur abkühlen. Ein danach aufgenommenes IR-Spektrum bestätigt die Isocyanatfreiheit.

### Beispiel 1: Kleb-Dichtstoffformulierung auf Basis eines erfindungsgemäßen Polymers (P)

168,0 g Polymer aus Herstellbeispiel 2 werden in einem Laborplanetenmischer der Fa. PC-Laborsystem, ausgestattet mit zwei Balkenmischern, bei ca. 25°C mit 8,0 g Vinyltrimethoxysilan (käuflich erhältlich unter der GENIOSIL^{®} XL 10 bei der Firma Wacker Chemie AG, D-München) 2 Minuten bei 200 U/min homogenisiert.

Danach werden 220,0 g eines mit Stearinsäure beschichteten gemahlenen Calciumcarbonats mit einem mittleren Teilchendurchmesser (D50%) von ca. 0,4 µm (käuflich erhältlich unter der Bezeichnung Omyabond 302 bei der Firma Omya, D-Köln) zugegeben und eine Minute unter Rühren bei 600 U/min aufgeschlossen. Schließlich werden 4,0 g N-[2-Aminoethyl]-3-Aminopropyltrimethoxysilan (käuflich erhältlich unter der GENIOSIL^{®} GF 91 bei der Firma Wacker Chemie AG, D-München) 1 Minute bei 200 U/min eingemischt und 1 Minute bei 200 U/min im Teilvakuum (ca. 100 mbar) homogenisiert und blasenfrei gerührt.

Die so erhaltene Masse wird in zwei 310 ml PE-Kartusche abgefüllt (ca. 200 g pro Kartusche) und für 24 Stunden bei 20°C vor der Untersuchung gelagert.

### Vergleichsbeispiel V1:

Es wird vorgegangen wie in Beispiel 1, jedoch wird anstelle des erfindungsgemäßen Polymers aus Herstellbeispiel 2 die identische Menge eines beidseitig silanterminierten Polypropylenglycols mit einer mittleren Molmasse (Mₙ) von 12000 g/mol und Endgruppen der Formel -O-C(=O)-NH-CH₂-SiCH₃(OCH₃)₂ (käuflich erhältlich unter der Bezeichnung GENIOSIL^{®} STP-E10 bei der Wacker Chemie AG, D-München) verwendet.

### Beispiel 2: Kleb-Dichtstoffformulierung auf Basis eines erfindungsgemäßen Polymers (P)

116,0 g Polymer aus Herstellbeispiel 2 werden in einem Laborplanetenmischer der Fa. PC-Laborsystem, ausgestattet mit zwei Balkenmischern, bei ca. 25°C mit 80 g eines beidseitig butylterminierten Polyethylenglycols mit einer zahlenmittleren Molmasse (Mₙ) von 300 g/mol (käuflich erhältlich unter dem Namen Polyglycol BB 300 bei der Fa. Clariant, D-Gendorf) und 8,0 g Vinyltrimethoxysilan 2 Minuten bei 200 U/min homogenisiert.

Danach werden 192,0 g Omyabond 302 zugegeben und eine Minute unter Rühren bei 600 U/min aufgeschlossen. Schließlich werden 4,0 g 3-Aminopropyltrimethoxysilan (käuflich erhältlich unter der GENIOSIL^{®} GF 96 bei der Firma Wacker Chemie AG, D-München) 1 Minute bei 200 U/min eingemischt und 1 Minute bei 200 U/min im Teilvakuum (ca. 100 mbar) homogenisiert und blasenfrei gerührt.

Die so erhaltene Masse wird in zwei 310 ml PE-Kartuschen abgefüllt (ca. 200 g pro Kartusche) und für 24 Stunden bei 20°C vor der Untersuchung gelagert.

### Vergleichsbeispiel V2:

Es wird vorgegangen wie in Beispiel 3, jedoch wird anstelle des erfindungsgemäßen Polymers aus Herstellbeispiel 2 die identische Menge GENIOSIL^{®} STP-E10 verwendet.

### Beispiel 3: Bestimmung von Eigenschaftsprofilen der hergestellten Kleb-Dichtstoffe

Die in den Beispielen 1 und 2 sowie den Vergleichsbeispielen V1 und V2 erhaltenen Kleb-Dichtstoffe wurden vernetzen gelassen und hinsichtlich ihrer Hautbildung und ihrer mechanischen Eigenschaften untersucht. Die Ergebnisse finden sich in Tabelle 1.

### Hautbildungszeit (HBZ)

Zur Bestimmung der Hautbildungszeit werden die in den Beispielen erhaltenen vernetzbaren Massen in einer 2 mm dicken Schicht auf PE-Folie aufgetragen und bei Normklima (23°C und 50% relative Luftfeuchtigkeit) gelagert. Während des Aushärtens wird einmal pro Minute die Bildung einer Haut getestet. Dazu wird ein trockener Laborspatel vorsichtig auf die Oberfläche der Probe aufgesetzt und nach oben gezogen. Bleibt Probe am Finger kleben, hat sich noch keine Haut gebildet. Bleibt keine Probe am Finger mehr kleben, so hat sich eine Haut gebildet und die Zeit wird notiert.

### Mechanische Eigenschaften

Die Massen werden jeweils auf ausgefräste Teflon^{®} -Platten mit 2 mm Tiefe ausgestrichen und 2 Wochen bei 23°C und 50 relativer Luftfeuchte gehärtet.

Die Shore-A-Härte wird gemäß DIN 53505 bestimmt.

Die Reißfestigkeit wird gemäß DIN 53504-S1 bestimmt. Reißdehnung wird gemäß DIN 53504-S1 bestimmt.

Das 100%-Modul wird gemäß DIN 53504-S1 bestimmt.

**Tabelle 1:**

| **Beispiel** | **1** | **V1*** | **2** | **V2** * |
|---|---|---|---|---|
| HZB [min] | 7 | 7 | 25 | 29 |
| Härte [Shore A] | 59 | 68 | 21 | 40 |
| 100%-Modul [N/mm] | 2, 8 | 3, 9 | 0, 6 | 1,2 |
| Reißfestigkeit [N/mm] | 3, 4 | 4,3 | 1,1 | 2,4 |
| Reißdehnung [%] | 133 | 126 | 228 | 190 |

| | | | | |
|---|---|---|---|---|
| * nicht erfindungsgemäß | | | | |

## Patentansprüche

1. Organyloxysilylterminierte Polymere (P) mit Endgruppen der Formel (I)
- (CR¹₂)_{b}-SiRₐ(OR²)₃₋ₐ (I),
wobei
R gleich oder verschieden sein kann und einen einwertigen, unsubstituierten oder substituierten, SiC-gebundenen Kohlenwasserstoffrest darstellt,
R¹ gleich oder verschieden sein kann und ein Wasserstoffatom oder einen einwertigen, unsubstituierten oder substituierten Kohlenwasserstoffrest darstellt,
R² gleich oder verschieden sein kann und ein Wasserstoffatom oder einen einwertigen, unsubstituierten oder substituierten Kohlenwasserstoffrest darstellt,
a gleich oder verschieden sein kann und 0, 1 oder 2, ist und
b gleich oder verschieden sein kann und eine ganze Zahl von 1 bis 10 ist,
die in ihrem Rückgrat 1,3-Dioxolan Copolymerbausteine (DP) der allgemeinen Formel (II)
-[(O-CH₂-O-CH₂-CH₂-)ₓ₁ (O-CH₂-CH₂-O-CH₂-)ₓ₂ (O-CH₂-O-CHR³-CHR⁴-)_{y1} (O-CHR³-CHR⁴-O-CH₂)]_{y2}-O- (II)
enthalten, wobei
R³ gleich oder verschieden sein kann und Wasserstoff oder einen einwertigen, unsubstituierten oder substituierten C₁- bis C₁₈-Alkylrest bedeutet,
R⁴ gleich oder verschieden sein kann und Wasserstoff oder einen einwertigen, unsubstituierten oder substituierten C₁- bis C₁₈-Alkylrest bedeutet,
x1+x2 Werte von 10 bis 2000 bedeutet,
y1+y2 Werte von 3_{*}(x1+x2+y1+y2)/100 bis 90_{*}(x1+x2+y1+y2)/100 bedeutet,
mit der Maßgabe, dass in den Einheiten [O-CH₂-O-CHR³-CHR⁴-]_{y1} und [O-CHR³-CHR⁴O-CH₂-]_{y2} jeweils mindestens ein Rest R³ oder R⁴ einen C₁- bis C₁₈-Alkylrest bedeutet.

2. Organyloxysilylterminierte Polymere (P) nach Anspruch 1, bei denen R ausgewählt wird aus Alkylresten mit 1 oder 2 Kohlenstoffatomen.

3. Organyloxysilylterminierte Polymere (P) nach einem der vorangehenden Ansprüche, bei denen R¹ ein Wasserstoffatom bedeutet.

4. Organyloxysilylterminierte Polymere (P) nach einem der vorangehenden Ansprüche, bei denen R² ausgewählt wird aus Methyl- und Ethylrest.

5. Organyloxysilylterminierte Polymere (P) nach einem der vorangehenden Ansprüche, bei denen R³ und R⁴ ausgewählt werden aus Wasserstoffatomen und C₁- bis C₆-Alkylresten.

6. Organyloxysilylterminierte Polymere (P) nach einem der vorangehenden Ansprüche, bei denen jeweils nur ein Rest R³ oder R⁴ in den Einheiten [O-CH₂-O-CHR³-CHR⁴-]_{y1} und [O-CHR³-CHR⁴O-CH₂-]_{y2} einen C₁- bis C₁₈-Alkylrest bedeutet, wohingegen der jeweils andere Rest für ein Wasserstoffatom steht.

7. Organyloxysilylterminierte Polymere (P) nach einem der vorangehenden Ansprüche, bei denen die 1,3-Dioxolan Copolymerbausteine (DP) der Formel (II) ein zahlenmittleres Molekulargewicht Mₙ zwischen 750 und 300000 Dalton aufweisen, gemessen nach der Methode wie in der Anmeldung beschrieben.

8. Verfahren (V3) zur Herstellung der organyloxysilylterminierten Polymere (P) gemäß einem der Ansprüche 1 bis 7, bei dem mit Hydroxylgruppen terminierte 1,3-Dioxolan Copolymere (DP-OH) der allgemeinen Formel (III)
H-[(O-CH₂-O-CH₂-CH₂-)ₓ₁ (O-CH₂-CH₂-O-CH₂-)ₓ₂ (O-CH₂-O-CHR³-CHR⁴-)_{y1} (O-CHR³-CHR⁴-O-CH₂)]_{y2}-OH (III),
mit mindestens einem isocyanatfunktionellen Silan der Formel (V)
OCN-(CR¹₂)_{b}-SiRₐ(OR²)₃₋ₐ (V)
umgesetzt werden, wobei R, R¹, R², R³, R⁴, x1+x2 und y1+y2, a und b die in den Ansprüchen 1 bis 7 angegebenen Bedeutungen aufweisen.

9. Zusammensetzung, welche die organyloxysilylterminierten Polymere (P) gemäß einem der Ansprüche 1 bis 7 und mindestens einen weiteren Bestandteil enthalten der ausgewählt wird aus (A) Stickstoff aufweisende Organosiliciumverbindungen, (B) Siliconharze, (C) Katalysatoren, (D) Haftvermittler, (E) Wasserfänger, (F) Füllstoffe, (G) Additive und (H) Zuschlagstoffe.

10. Kleb- oder Dichtstoff enthaltend organyloxysilylterminierte Polymere (P) entsprechend einem der Ansprüche 1 bis 7, organyloxysilylterminierte Polymere (P), hergestellt nach Anspruch 8 oder eine Zusammensetzung nach Anspruch 9.

## Claims

1. Organyloxysilyl-terminated polymers (P) having end groups of formula (I)
- (CR¹₂)_{b}-SiRₐ(OR²)₃₋ₐ (I),
where
R may be identical or different and is a monovalent, unsubstituted or substituted, SiC-bonded hydrocarbon radical,
R¹ may be identical or different and is a hydrogen atom or a monovalent, unsubstituted or substituted hydrocarbon radical,
R² may be identical or different and is a hydrogen atom or a monovalent, unsubstituted or substituted hydrocarbon radical,
a may be identical or different and is 0, 1 or 2, and
b may be identical or different and is an integer from 1 to 10,
which comprise 1,3-dioxolane copolymer units (DP) of the general formula (II) in the backbone thereof
-[(O-CH₂-O-CH₂-CH₂-)ₓ₁ (O-CH₂-CH₂-O-CH₂-)ₓ₂ (O-CH₂-O-CHR³-CHR⁴-)_{y1} (O-CHR³-CHR⁴-O-CH₂)]_{y2}-O- (II),
where
R³ may be identical or different and is hydrogen or a monovalent, unsubstituted or substituted C₁- to C₁₈-alkyl radical,
R⁴ may be identical or different and is hydrogen or a monovalent, unsubstituted or substituted C₁- to C₁₈-alkyl radical,
x1+x2 has values of 10 to 2000,
y1+y2 has values of 3*(x1+x2+y1+y2)/100 to 90* (x1+x2+y1+y2)/100,
with the proviso that, in the [O-CH₂-O-CHR₃-CHR⁴-]_{y1} and [O-CHR³-CHR⁴O-CH₂-]_{y2} units, in each case at least one radical R³ or R⁴ is a C₁- to C₁₈-alkyl radical.

2. Organyloxysilyl-terminated polymers (P) according to Claim 1, in which R is selected from alkyl radicals having 1 or 2 carbon atoms.

3. Organyloxysilyl-terminated polymers (P) according to either of the preceding claims, in which R¹ is a hydrogen atom.

4. Organyloxysilyl-terminated polymers (P) according to any of the preceding claims, in which R² is selected from methyl radical and ethyl radical.

5. Organyloxysilyl-terminated polymers (P) according to any of the preceding claims, in which R³ and R⁴ are selected from hydrogen atoms and C₁- to C₆-alkyl radicals.

6. Organyloxysilyl-terminated polymers (P) according to any of the preceding claims, in which in each case only one radical R³ or R⁴ in the [O-CH₂-O-CHR³-CHR⁴-]_{y1} and [O-CHR³-CHR⁴O-CH₂-]_{y2} units is a C₁- to C₁₈-alkyl radical, whereas the other radical in each case is a hydrogen atom.

7. Organyloxysilyl-terminated polymers (P) according to any of the preceding claims, in which the 1,3-dioxolane copolymer units (DP) of formula (II) have a number-average molecular weight Mₙ between 750 and 300 000 daltons, measured according to the method as described in the application.

8. Process (P3) for producing the organyloxysilyl-terminated polymers (P) according to any of Claims 1 to 7, in which hydroxyl group-terminated 1,3-dioxolane copolymers (DP-OH) of the general formula (III)
H-[(O-CH₂-O-CH₂-CH₂-)ₓ₁ (O-CH₂-CH₂-O-CH₂-)ₓ₂ (O-CH₂-O-CHR³-CHR⁴-)_{y1} (O-CHR³-CHR⁴-O-CH₂)]_{y2}-OH (III),
are reacted with at least one isocyanate-functional silane of formula (V)
OCN-(CR¹₂)_{b}-SiRₐ(OR²)₃₋ₐ (V),
where R, R¹, R², R³, R⁴, x1+x2 and y1+y2, a and b have the definitions given in Claims 1 to 7.

9. Composition comprising the organyloxysilyl-terminated polymers (P) according to any of Claims 1 to 7 and at least one further constituent selected from (A) nitrogen-containing organosilicon compounds, (B) silicone resins, (C) catalysts, (D) adhesion promoters, (E) water scavengers, (F) fillers, (G) additives and (H) aggregates.

10. Adhesive or sealant containing organyloxysilyl-terminated polymers (P) according to any of Claims 1 to 7, organyloxysilyl-terminated polymers (P) produced according to Claim 8 or a composition according to Claim 9.

## Revendications

1. Polymères terminés par organyloxysilyle (P) présentant des groupes terminaux de formule (I)
-(CR¹₂)_{b}-SiRₐ(OR²)₃₋ₐ (I),
dans laquelle
R peut être identique ou différent et représente un radical hydrocarboné monovalent, non substitué ou substitué, lié par SiC,
R¹ peut être identique ou différent et représente un atome d'hydrogène ou un radical hydrocarboné monovalent, non substitué ou substitué,
R² peut être identique ou différent et représente un atome d'hydrogène ou un radical hydrocarboné monovalent, non substitué ou substitué,
a peut être identique ou différent et vaut 0, 1 ou 2 et b peut être identique ou différent et représente un nombre entier de 1 à 10,
qui contiennent, dans leur squelette, des éléments constitutifs copolymères de 1,3-dioxolane (DP) de formule générale (II)
-[(O-CH₂-O-CH₂-CH₂-)ₓ₁ (O-CH₂-CH₂-O-CH₂-)ₓ₂ (O-CH₂-O-CHR³-CHR⁴-)_{y1} (O-CHR³-CHR⁴-O-CH₂)]_{y2}-O- (II)
dans laquelle
R³ peut être identique ou différent et signifie hydrogène ou un radical C₁-C₁₈-alkyle monovalent, non substitué ou substitué,
R⁴ peut être identique ou différent et signifie hydrogène ou un radical C₁-C₁₈-alkyle monovalent, non substitué ou substitué,
x1+x2 signifie des valeurs de 10 à 2000,
y1+y2 signifie des valeurs de 3*(x1+x2+y1+y2)/100 à 90* (x1+x2+y1+y2)/100,
étant entendu que dans les motifs [O-CH₂-O-CHR₃-CHR⁴-]_{y1} et [O-CHR³-CHR⁴O-CH₂-]_{y2}, à chaque fois au moins un radical R³ ou R⁴ signifie un radical C₁-C₁₈-alkyle.

2. Polymères terminés par organyloxysilyle (P) selon la revendication 1, dans lesquels R est choisi parmi les radicaux alkyle comprenant 1 ou 2 atomes de carbone.

3. Polymères terminés par organyloxysilyle (P) selon l'une des revendications précédentes, dans lesquels R¹ signifie un atome d'hydrogène.

4. Polymères terminés par organyloxysilyle (P) selon l'une des revendications précédentes, dans lesquels R² est choisi parmi un radical méthyle et un radical éthyle.

5. Polymères terminés par organyloxysilyle (P) selon l'une des revendications précédentes, dans lesquels R³ et R⁴ sont choisis parmi les atomes d'hydrogène et les radicaux C₁-C₆-alkyle.

6. Polymères terminés par organyloxysilyle (P) selon l'une des revendications précédentes, dans lesquels à chaque fois seul un radical R³ ou R⁴ dans les motifs [O-CH₂-O-CHR³-CHR⁴-]_{y1} et [O-CHR³-CHR⁴O-CH₂-]_{y2} signifie un radical C₁-C₁₈-alkyle, alors que l'autre radical respectif représente un atome d'hydrogène.

7. Polymères terminés par organyloxysilyle (P) selon l'une des revendications précédentes, dans lesquels les éléments constitutifs copolymères de 1,3-dioxolane (DP) de formule (II) présentent un poids moléculaire moyen en nombre Mₙ entre 750 et 300.000 daltons, mesuré selon la méthode telle que décrite dans la demande.

8. Procédé (V3) pour la préparation de polymères terminés par organyloxysilyle (P) selon l'une des revendications 1 à 7, dans lequel des copolymères de 1,3-dioxolane terminés par des groupes hydroxyle (DP-OH) de formule générale (III)
H-[(O-CH₂-O-CH₂-CH₂-)ₓ₁ (O-CH₂-CH₂-O-CH₂-)ₓ₂ (O-CH₂-O-CHR³-CHR⁴-)_{y1} (O-CHR³-CHR⁴-O-CH₂)]_{y2}-OH (III),
sont transformés avec au moins un silane à fonctionnalité isocyanate de formule (V)
OCN- (CR¹₂)_{b}-SiRₐ(OR²)₃₋ₐ (V)
dans laquelle R, R¹, R², R³, R⁴, x1+x2 et y1+y2, a et b présentent les significations indiquées dans les revendications 1 à 7.

9. Composition qui contient les polymères terminés par organyloxysilyle (P) selon l'une des revendications 1 à 7 et au moins un autre constituant qui est choisi parmi (A) des composés organosiliciés présentant azote, (B) des résines de silicone, (C) des catalyseurs, (D) des promoteurs d'adhérence, (E) des pièges d'eau, (F) des charges, (G) des additifs et (H) des agrégats.

10. Adhésif ou matériau d'étanchéité, contenant des polymères terminés par organyloxysilyle (P) selon l'une des revendications 1 à 7, des polymères terminés par organyloxysilyle (P) préparés selon la revendication 8 ou une composition selon la revendication 9.
